Europäisches Patentamt

European Patent Office

Office européen des brevets

(11) Veröffentlichungsnummer: **0 266 525 B1**

# EUROPÄISCHE PATENTSCHRIFT

(45) Veröffentlichungstag der Patentschrift: 20.03.91

(51) Int. Cl.⁵: **G01B 11/28**, G01B 11/24

(21) Anmeldenummer: **87113564.6**

(22) Anmeldetag: **16.09.87**

Die Akte enthält technische Angaben, die nach dem Eingang der Anmeldung eingereicht wurden und die nicht in dieser Patentschrift enthalten sind.

(54) **Verfahren zum Generieren von Lagesignalen, die Orte repräsentieren, welche die etwa elliptische Querschnittsfläche eines Objektes begrenzen.**

(30) Priorität: **30.09.86 DE 3633275**

(43) Veröffentlichungstag der Anmeldung:
**11.05.88 Patentblatt 88/19**

(45) Bekanntmachung des Hinweises auf die Patenterteilung:
**20.03.91 Patentblatt 91/12**

(84) Benannte Vertragsstaaten:
**AT DE SE**

(56) Entgegenhaltungen:
**AT-B- 351 282**
**DE-A- 3 219 389**
**DE-A- 3 542 896**
**US-A- 3 806 253**

(73) Patentinhaber: **Siemens Aktiengesellschaft**
**Wittelsbacherplatz 2**
**W-8000 München 2(DE)**

(72) Erfinder: **Hoffmann, Hans-Jürgen**
**Fasanenweg 26**
**W-8522 Niederndorf(DE)**

## Beschreibung

Die Erfindung bezieht sich auf ein Verfahren gemäß dem Oberbegriff des Anspruchs 1

Ein derartiges verfahren, das zur Vermessung von Baumstämmen in einem Sägewerk geeignet ist, ist aus der Druckschrift "Lignotron" der Siemens AG Bestell-Nr.A19I00-E872-A180 bekannt. Bei diesem Verfahren wird mit Hilfe von drei Schattenbildkameras zum einen der mittlere Stammdurchmesser erfaßt,zum anderen wird der Krümmungsverlauf längs des Stammes ermittelt. Ausgegangen wird dabei stets von den Schnittpunkten der Schattenkanten, die die Querschnittsfläche des jeweiligen Baumstammes polygonartig umgrenzen. Die Lage dieser Schnittpunkte variiert dabei jedoch ganz erheblich je nach Form und Lage des zu vermessenden Objektes, d.h. des Baumstammes. Wollte man jedoch, um ein gutes Bewertungskriterium für die Stammform zu gewinnen, in einem vorgegebenen Radialnetz die Durchmesserwerte des Stammes ermitteln, wäre dies beim Stand der Technik allenfalls dadurch möglich, daß aus den Schnittpunkten über mathematische relativ komplizierte Beziehungen die allgemeine Gleichung einer vom Polygonzug eingegrenzten Ellipse bestimmt würde und daß mit Hilfe dieser Gleichung die relevanten Koordinatenpunkt errechnet würden.

Aus der DE-OS 35 42 896 ist ein Verfahren bekannt, das es ermöglicht, den mittleren Durchmesser eines etwa elliptischen Objektes mit Hilfe zweier Schattenbildkameras zu ermitteln, indem als Referenzwert für den mittleren Durchmesser die von den Schattenkanten umschlossene Polygonfläche ausgewertet wird. Zwei Kameras umspannen dabei ein Viereck, der Einsatz von drei Kameras würde dementsprechend ein Sechseck umspannen. Diese Sechseckanordnung als solche ist im übrigen auch bereits aus der DE-OS 32 19 389 bekannt.

Aufgabe der Erfindung ist es, ein Verfahren der eingangs genannten Art so auszubilden, daß unter Einsatz von drei Aufnahmegeräten in einem 45° Radialnetz Lagesignale generiert werden können, die das elliptische Objekt eindeutig eingrenzen, ohne daß dazu ein aufwendiges technisches Verfahren erforderlich ist. Drei Aufnahmegeräte geben damit nicht nur sechs, sondern acht signifikante, das Objekt eingrenzende Punkte an, wobei beim Stand der Technik die sechs Punkte ein das Objekt umschreibendes Polygon darstellen, während bei der Erfindung die acht Punkte auf der ovalen (elliptischen) Kontur des Objektes liegen. Die Erfindung gemäß Anspruch 1 löst diese Aufgabe.

Dabei wird es durch die Erfindung ermöglicht, aus sechs Schattenkantenschnittpunkten, die ein unregelmäßiges, das Objekt eingrenzendes Polygon darstellen, acht, die Querschnittsfläche des elliptischen Objekts begrenzende, einem vorgegebenen Radialnetz zugeordnete Lagesignale ermittelt werden können. Damit ist auch bei einer Änderung der Form der Querschnittsfläche längs einer Achse, wie dies bei Baumstämmen stets der Fall ist, eine leichte Vergleichbarkeit der jeweils durch das erfindungsgemäße Verfahren generierten Lagesignale ohne aufwendige Operationen in der Verarbeitungseinrichtung möglich.

Eine erste vorteilhafte Ausbildung der Erfindung ist dadurch gekennzeichnet, daß unter Zugrundelegung der Orte der Schattenkantenschnittpunkte die mittleren Abstände der Seiten desjenigen Vierecks gebildet werden, das von den vom ersten und zweiten Aufnahmegerät ermittelten Schattenkanten gebildet ist, und daß den mittleren Abständen jeweils proportionale Signale als erstes und als zweites Durchmessersignal erzeugt werden. Da der mittlere Durchmesser des Objektes gemäß dem bekannten Stand der Technik (DE-Anm. P 35 42 896.1) relativ genau bestimmbar ist und die Ovalität sich innerhalb einer gegenüber diesem mittleren Durchmesser relativ geringe Bandbreite bewegt, sind Meßfehler, die sich daraus ergeben, daß die mittleren Abstände der jeweils einander gegenüberliegenden Seiten dieses Vierecks nicht ganz genau dem tatsächlichen Durchmesser entsprechen, unbedeutend.

Eine weitere vorteilhafte Ausbildung der Erfindung ist dadurch gekennzeichnet, daß unter Zugrundelegung eines durch die Schattenkanten bestimmten, das Objekt eingrenzenden Sechsecks der mittlere Abstand derjenigen Seiten des Sechsecks gebildet wird, die durch die vom dritten Aufnahmegerät erfaßten Schattenkanten entstehen, und daß ein diesem mittleren Abstand proportionales Signal als drittes Durchmessersignal erzeugt wird. Da auch dieses Durchmessersignal auf das Ovalitätssignal, in diesem Fall ein die zweite Ovalität bezeichnendes Signal, einwirkt, gilt auch hier dies oben im Zusammenhang mit dem die erste Ovalität bezeichnenden Signal genannte.

Ein Ausführungsbeispiel der Erfindung ist in der Zeichnung dargestellt und wird im folgenden näher erläutert.

Dabei zeigen:

Fig. 1 ein Blockschaltbild der Erfindung,

Fig. 2 eine Skizze zu Ermittlung der ersten und zweiten Durchmesser und

Fig. 3 ein Diagramm zur Darstellung der für die elliptische Querschnittsfläche des Objekts repräsentativen Orte.

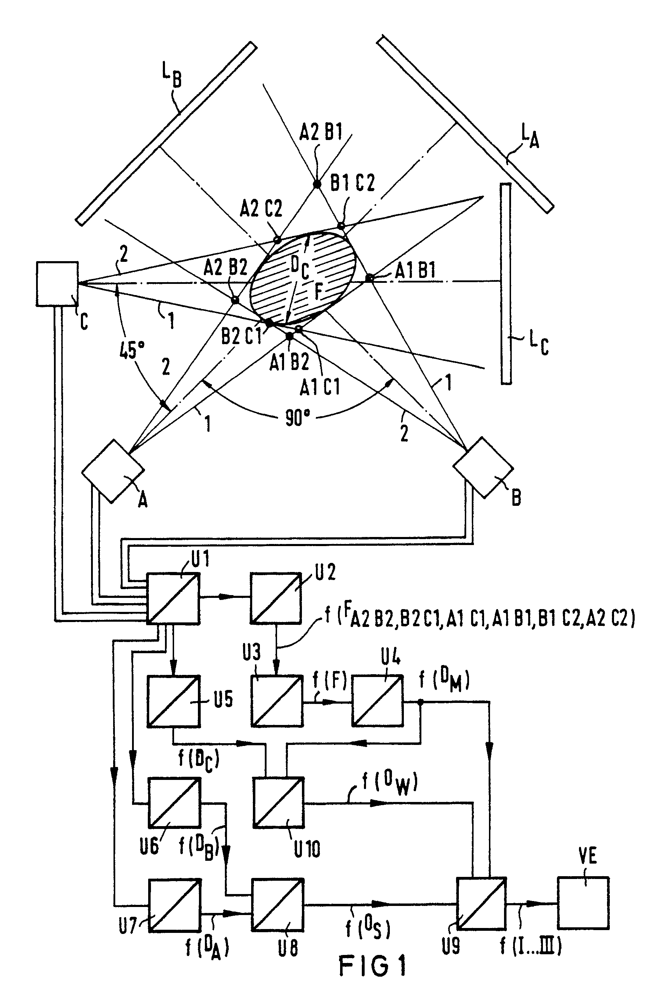

In der Darstellung gemäß Fig.1 ist schraffiert die Querschnittsfläche F eines Objekts, in diesem Fall eines Baumstammes, gezeigt, die eine etwa elliptische Form aufweist. Zur Vermessung der Querschnittsfläche sind drei optische Aufnahmegeräte A, B und C vorgesehen, die als Schattenbildkameras ausgebildet sind und mit Leuchtstoffröhren L$_A$, L$_B$ und L$_C$ zusammenwirken. Dabei sind die Aufnahmegeräte A und B mit ihren durch strichpunktierte Linien angedeuteten optischen Achsen in einem Winkel von 90° gegeneinander versetzt, während die optische Achse des Aufnahmegerätes C, die ebenfalls strichpunktiert angedeutet ist, um 45° zum Aufnahmegerät A und um 135° zum Aufnahmegerät B ausgerichtet ist. Die von den Aufnahmegeräten A, B und C jeweils erfaßten Schattenkanten sind jeweils mit Ziffern 1 und 2 bezeichnet. Die sich ergebenden Schnittpunkte der Schattenkanten sind jeweils sowohl durch die Bezugszeichen A, B und C der Aufnahmegeräte, als auch durch die zugehörigen Ziffern 1 und 2 für die entsprechenden Schattenkanten bezeichnet. Beispielsweise ist der Schnittpunkt der vom Aufnahmegerät A detektierten Schattenkante 1 mit der vom Aufnahmegerät B erfaßten Schattenkante 2 als A1B2 bezeichnet.

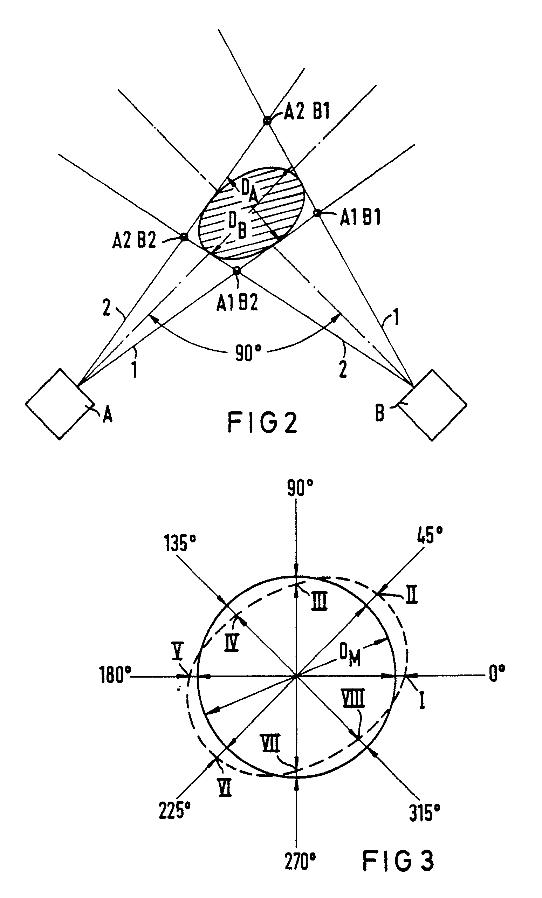

Bei Verwendung von drei Aufnahmegeräten A, B und C bilden die Schnittpunkte der Schattenkanten um die Querschnittsfläche F des Objekts ein unregelmäßiges Sechseck. Im Ausführungsbeispiel sind die Eckpunkte dieses Sechseckes mit A2B2, B2C1, A1C1, A1B1, B1C2 und A2C2 bezeichnet. Ferner sind in der Darstellung noch Schnittpunkte A1B2 und A2B1 angegeben, auf deren Bedeutung im Zusammenhang mit Fig.2 noch eingegangen wird.

Die Schattenkantensignale der Aufnahmegeräte A, B und C gelangen als Winkelsignale an einen Umsetzer U1, der unter Zugrundelegung der trigonometrischen Winkelbeziehungen die Koordinaten der Schnittpunkte der Schattenkanten ermittelt und entsprechende elektrische Signale an seinem Ausgang zur Verfügung stellt. Aus den Koordinaten des die Querschnittsfläche F eingrenzenden Sechsecks wird in einem Umsetzer U2 die Fläche dieses Sechsecks errechnet und ein dementsprechenden Signal f (F$_{A2B2, B2C1, A1C1, A1B1, B1C2, A2C2}$) ermittelt. Dieses der Fläche des Sechsecks entsprechende Signal gelangt an einen Umsetzer U3, der eine Wichtung dieser Fläche im Sinne einer Multiplikation mit um einem Faktor pi 12$^{0.5}$ vornimmt und dementsprechend ein die tatsächliche Fläche des Objekts bezeichnendes Signal f (F) generiert. Dabei liegt dem Umsetzvorgang für den Umsetzer U3 die Erkenntnis zugrunde, daß bei einer Anordnung von drei Aufnahmegeräten und einer Annahme, daß die zu vermessenden Objekten nährungsweise elliptische Querschnittsflächen aufweisen, der obengenannte Faktor unabhängig von der Stärke der Ovalität stets gleich ist.

Das Ausgangssignal des Umsetzers U3 wird einem Umsetzer U4 zugeführt, der aus der Querschnittsfläche F des elliptischen Obekts über die Beziehung F = pi (D$_M$ 2)$^2$ auf den mittleren Durchmesser D$_M$ schließt, der dann in Form eines elektrischen Signals f (D$_M$) am Ausgang des Umsetzers U4 vorliegt.

In einem Umsetzer U5 wird anhand der Schnittpunkte B2C1, A1C1 sowie A2C2 und B1C2 der Mittelpunkt der Strecken B2C1 nach A1B2 und A2C2 nach B1C2 ermittelt und die Differenzstrecke zwischen diesen beiden Mittelpunkten als ein für das Aufnahmegerät C repräsentativer Durchmesser D$_C$ (dritter Durchmesser) gewonnen. Ein entsprechendes elektrisches Signal f (D$_C$) gelangt ebenso wie das dem mittleren Durchmesser D$_M$ entsprechende Signal f (D$_M$) an einem Umsetzer U10. Bei diesem Umsetzer U10 wird die Differenz zwischen dem mittleren Durchmesser D$_M$ und dem dritten Durchmesser D$_C$ gebildet und ein entsprechendes eine zweite Ovalität (auf die erste Ovalität wird im folgenden noch eingegangen) des Objektes bezeichnendes Signal f (O$_W$) generiert. Die Größe dieser zweiten Ovalität deutet darauf hin, wie stark parallel oder rechtwinklig zur optischen Achse des dritten Aufnahmegerätes C eine Verzerrung von einer Kreisform in eine Ellipsenform vorliegt. Ein positives Vorzeichen der ermittelten Differenz deutet dabei darauf hin, daß die große Achse der Ellipse parallel zur optischen Achse des Aufnahmegerätes C verläuft, ein negatives Vorzeichen deutet darauf hin, daß die große Achse der erfaßten Ellipse senkrecht zur optischen Achse des Aufnahmegerätes C sich erstreckt.

Die Koordinaten der Schnittpunkte A2B2, A1B2, A1B1 und A2B1 werden Umsetzern U6 und U7 zugeführt, die aus den Werten dieser Koordinaten einen ersten Durchmesser D$_A$ und einen zweiten Durchmesser D$_B$ ermitteln, wie dies in der Darstellung gemäß Fig.2 skizziert ist. Der Durchmesser D$_A$ entspricht dabei einem vom Aufnahmegerät A erfaßten ersten Durchmesser des Objekts, während der Durchmesser D$_B$ einem vom Aufnahmegerät B erfaßten zweiten Durchmesser entspricht. Zur Ermittlung des ersten Durchmessers D$_A$ und des zweiten Durchmessers D$_B$ wird jeweils der Mittelpunkt der Strecke A2B2 nach A1B2, A1B2 nach A1B1, A1B1 nach A2B1 und A2B1 nach A2B2 gebildet und die entsprechenden Differenzen zwischen diesen ermittelten Punkten geben unmittelbar die Größe des ersten Durchmesser D$_A$ und des zweiten Durchmessers D$_B$ an. Da der erste Durchmesser D$_A$ und der zweite Durchmesser D$_B$ für die weitere Verarbeitung zur Bestimmung einer ersten Ovalität als sogenannter "Schrägovalität" dienen (die obengenannte zweite Ovalität O$_W$ kann bei der vorliegenden Anordnung der Aufnahmegeräte A, B und C auch als waagrechte Ovalität bezeichnet werden) und da die Ovalität bei realen Objekten, z.B. Baumstämmen, relativ klein gegenüber dem recht genau gemessenen mittleren Durchmesser D$_M$ ist, ist es für die Weiterverarbeitung unbedeutend, daß zwischen dem Wert für den ersten Durchmesser $D_A$ und dem Wert des zweiten Durchmessers $D_C$ gegenüber dem tatsächlichen Durchmesser des Objekts eine geringfügige Abweichung vorliegt.

Wenn somit von den Umsetzern U6 und U7 ein dem ersten Durchmesser $D_A$ entsprechendes elektrisches Signal f ($D_A$) bzw. f ($D_B$) ermittelt worden ist, wie dies durch die Skizze gemäß Fig.2 prinzipiell erläutert wurde und in der Fig.1 im Schaltbild gezeigt ist, gelangen diese Signale an einen Umsetzer U8, der die Differenz des halben Durchmesser $D_B$ und des halben Durchmessers $D_A$ bildet und dieses Differenzergebnis als ein die erste Ovalität des Objektes bezeichnendes Signal f ($O_S$) an einen Umsetzer U9 weiterleitet. Diese Ovalität kann deswegen als Schrägovalität bezeichnet werden, weil immer dann, wenn bei der gewählten Anordnung der Aufnahmegeräte A, B und C die Differenzbildung ein positives Vorzeichen ergibt, die große Hauptachse der Ellipse in Richtung der optischen Achse des Aufnahmegerätes A ausgerichtet ist, während immer dann, wenn ein negatives Vorzeichen vorliegt, die Hauptachse der Ellipse in Richtung auf die optische Achse des optischen Aufnahmegerätes B ausgerichtet ist.

Die erste und die zweite Ovalität beschreiben vollständig und erschöpfend eine ideale Ellipse, wie sie durch das zu erfassende Objekt näherungsweise gegeben ist. Um die erstrebten Lagesigna-le für diese Ellipse in einem Radialnetz mit 45° Stufung zu erhalten, werden einem Umsetzer U9 der mittlere Durchmesser $D_M$, die erste Ovalität $O_S$ und die zweite Ovalität $O_W$ in Form der entsprechenden Signale f ($D_M$), f ($O_S$) und f ($O_W$) übermittelt. Dabei wird im Umsetzer U9 ein Umsetzvorgang vorgenommen, wie dieser in der Darstellung gemäß Fig.3 beschrieben ist.

In der Darstellung gemäß Fig.3 ist ein Koordinatensystem gezeigt, bei dem eine Achse 0° nach 180° der optischen Achse des Aufnahmegerätes C entspricht und die Achsen 45° nach 225° und 135° nach 315° den optischen Achsen der Aufnahmegeräte A und B entsprechen. Demgemäß liegt ein radiales Koordinatensystem vor, das in 45° Schritten gerastert ist. Ausgehend vom Zentrum dieses Koordinatensystems wird der mittlere Durchmesser $D_M$ als erstes Kriterium für die Abmessung des zu vermessenden Objektes angenommen. Dieses Objekt ist jedoch nicht kreisrund mit einem mittleren Durchmesser $D_M$ sondern es weist eine elliptische Form auf, die durch die erste und die zweite Ovalität gekennzeichnet ist. Dementsprechend sind die Schnittpunkte des radialen 45° Netzes mit einer dem mittleren Durch-messer $D_M$ angepaßten Ortskurve folgendermaßen zu variieren.

| Bei 0°: | Abstand des Ellipsenpunktes I vom Koordinatenursprung entspricht $D_M/2 + O_W/2$ |
| Bei 45°: | Abstand des Ellipsenpunktes II vom Koordinatenursprung entspricht $D_M/2 + O_S/2$ |
| Bei 90°: | Abstand des Ellipsenpunktes III vom Koordinatenursprung entspricht $D_M/2 - O_W/2$ |
| Bei 135°: | Abstand des Ellipsenpunktes IV vom Koordinatenursprung entspricht $D_M/2 - O_S/2$ |
| Bei 180°: | Abstand des Ellipsenpunktes V vom Koordinatenursprung entspricht $D_M/2 + O_W/2$ |
| Bei 225°: | Abstand des Ellipsenpunktes VI vom Koordinatenursprung entspricht $D_M/2 + O_S/2$ |
| Bei 270°: | Abstand des Ellipsenpunktes VII vom Koordinatenursprung entspricht $D_M/2 - O_W/2$ |
| Bei 315°: | Abstand des Ellipsenpunktes VIII vom Koordinatenursprung entspricht $D_M/2 - O_S/2$. |

Die Koordinatenpunkte sind damit durch Richtung und Entfernung vom Koordinatenursprung definiert, können aber auch durch eine einfache Koordinatentransformation in kartesische Koordinaten umgewandelt werden. Entsprechende Lagesignale werden als elektrische Signale f (I bis VIII) vom Umsetzer U9 generiert und gelangen an eine nachgeschaltete Verarbeitungseinrichtung VE.

Es wäre auch möglich, an Stelle von Schattenbildkameras Lichtvorhänge einzusetzen. Dadurch würden zwar die Meßwertungenauigkeit bezüglich der Durchmesser $D_A$, $D_B$ und $D_C$ beseitigt, jedoch sind derartige Lichtvorhänge bei gleichem optischen Auflösungsvermögen technisch aufwendiger.

## Ansprüche

1. Verfahren zum Generieren von Lagesignalen (f(I...III)), die Orte (I,...,VIII) repräsentieren, welche die etwa elliptische Querschnittsfläche eines Objektes begrenzen, wobei aus drei Richtungen mit auf die zu erwartende Position des Objektes ausgerichteten optischen Aufnahmegeräten (A,B,C) die räumliche Lage der jeweiligen Schattenkanten des Objektes bestimmt wird, die optischen Achsen des ersten (A) und des zweiten Aufnahmegerätes (B) etwa 90° gegeneinander gedreht sind, die Achse des dritten Aufnahmegerätes (C) um etwa 45° zur Achse des ersten und etwa 135° zur Achse des zweiten Aufnahmegerätes angeordnet ist, sich die Achsen zentrisch schneiden, und eine Auswerteschaltung (U1 bis U9) aus den Schattenkantensignalen des ersten, zweiten und dritten Aufnahmegerätes ein Signal (f(D$_M$)) für einen mittleren Durchmesser D$_M$ des Objektes und aus dem Schattenkantensignal des ersten Aufnahmegerätes ein Signal (f(D$_A$)) für einen ersten Durchmesser D$_A$, des zweiten Aufnahmegerätes ein Signal (f(D$_B$)) für einen zweiten Durchmesser D$_B$ und des dritten Aufnahmegerätes ein Signal (f(D$_C$)) für einen dritten Durchmesser (D$_C$) bildet, **dadurch gekennzeichnet,**

- daß die Differenz des halben ersten D$_A$ und des halben zweiten Durchmessers D$_B$ als erste Korrekturgröße O$_S$ gebildet wird,
- daß die Differenz des mittleren Durchmessers D$_M$ und des dritten Durchmessers D$_C$ als zweite Korrekturgröße O$_W$ gebildet wird, und
- die Lagesignale aus den Signalen für den mittleren Durchmesser und die erste und zweite Korrekturgröße gebildet und einer weiteren Verarbeitungseinrichtung (VE) zugeführt werden, wobei die Lagesignale Orte (I-VIII) auf den optischen Achsen und einer weiteren zur Achse des dritten Aufnahmegerätes senkrecht und durch den gemeinsamen Achsenschnittpunkt gehenden Achse bestimmen, die vom gemeinsamen Achsenschnittpunkt die Abstände DM/2 + O$_S$/2 auf der Achse des ersten Aufnahmegerätes, DM/2 - O$_S$/2 auf der Achse des zweiten Aufnahmegerates, DM/2 + O$_W$/2 auf der Achse des dritten Aufnahmegerätes und DM/2 - O$_W$/2 auf der weiteren Achse aufweisen.

2. Verfahren nach Anspruch 1, **dadurchgekennzeichnet,** daß unter Zugrundelegung der Orte der Schattenkantenschnittpunkte die mittleren Abstände der Seiten desjenigen Vierecks gebildet werden, das von den vom ersten und zweiten Aufnahmegerät ermittelten Schattenkanten gebildet ist, und daß den mittleren Abständen jeweils proportionale Signale als erstes und als zweites Durchmessersignal erzeugt werden.

3. Verfahren nach Anspruch 1 oder 2, **dadurch gekennzeichnet,** daß unter Zugrundelegung eines durch die Schattenkanten bestimmten, das Objekt eingrenzenden Sechsecks der mittlere Abstand derjenigen Seiten des Sechsecks gebildet wird, die durch die vom dritten Aufnahmegerät erfaßten Schattenkanten entstehen, und daß ein diesem mittleren Abstand proportionales Signal als drittes Durchmessersignal erzeugt wird.

Claims

1. Process for generating position signals (f(I...III)), which represent points (I,...,VIII) delimiting the approximately elliptical cross-sectional area of an object, in which the spatial position of the respective shadow edges of the object is determined from three directions with optical recording devices (A,B,C) aligned to the expected position of the object, the optical axes of the first (A) and of the second recording device (B) are angled at approximately 90° to one another, the axis of the third recording device (C) is arranged at approximately 45° to the axis of the first recording device and approximately 135° to the axis of the second one, the axes intersect centrally, and an evaluation circuit (U1 to U9) forms from the shadow edge signals of the first, second and third recording devices a signal (f (D$_M$)) for an average diameter D$_M$ of the object and forms from the shadow edge signal of the first recording device a signal (f(D$_A$)) for a first diameter D$_A$, from the shadow edge signal of the second recording device a signal (f(D$_B$)) for a second diameter D$_B$ and from the shadow edge signal of the third recording device a signal (f(Dc)) for a third diameter (D$_C$), characterized in that

- the difference between half the first diameter D$_A$ and half the second diameter D$_B$ is formed as a first correction quantity O$_S$,
- the difference between the average diameter D$_M$ and the third diameter D$_C$ is formed as a second correction quantity O$_W$, and
- the position signals are formed from the signals for the average diameter and the first and second correction quantities and are supplied to a further processing device (VE), the position signals defining points (I-VIII) on the optical axes and a further axis perpendicular to the axis of the third recording device and passing through the common point of intersection of the axes, which points (I-VIII) are spaced from the common point of intersection of the axes by the distances DM/2 + O$_S$/2 along the axis of the first recording device, DM/2 - O$_S$/2 along the axis of the second recording device, DM/2 + O$_W$/2 along the axis of the third recording device and DM/2 - O$_W$/2 along the further axis.

2. Process according to claim 1, characterized in that on the basis of the positions of the points of intersection of the shadow edges, the average spacings of the sides of that quadrilateral which is formed by the shadow edges determined by the first and second recording devices are formed, and in that signals proportional respectively to the average spacings are produced as first and second diameter signals.

3. Process according to claim 1 or 2, characterized in that taking as the basis a hexagon defined by the shadow edges and enclosing the object, the average spacing of those sides of the hexagon which result from the shadow edges detected by the third recording device is formed, and in that a signal proportional to this average spacing is produced as a third diameter signal.

## Revendications

1. Procédé pour produire des signaux de position (f (I...III)), qui représentent des lieux (I,...,VIII), qui limitent la surface approximativement elliptique en coupe transversale d'un objet, et selon lequel, à partir de trois directions, on détermine avec des appareils optiques d'enregistrement (A,B,C) alignés sur la position de l'objet, à laquelle il faut s'attendre, la position spatiale des bords respectifs de l'ombre de l'objet, on fait pivoter d'environ 90° l'un par rapport aux autres les axes optiques du premier appareil d'enregistrement (A) et du second appareil d'enregistrement (B), l'axe du troisième appareil d'enregistrement (C) est décalé d'environ 45° par rapport à l'axe du premier appareil d'enregistrement et d'environ 135° par rapport à l'axe du second appareil d'enregistrement, les axes se recoupent dans une position centrée, et un circuit d'évaluation (U1 à U9) forme, à partir des signaux des bords des ombres fournis par les premier, second et troisième appareils d'enregistrement, un signal (f(D$_M$)) pour un diamètre moyen D$_M$ de l'objet et, à partir du signal du bord de l'ombre fourni par le premier appareil d'enregistrement, un signal (f (D$_A$)) pour un premier diamètre D$_A$, et à partir du signal du bord de l'ombre fourni par le second appareil d'enregistrement un signal (f(D$_B$)) pour un second diamètre D$_B$ et à partir du signal du bord de l'ombre fourni par le troisième appareil d'enregistrement un signal (f(D$_C$)) pour un troisième diamètre (D$_C$), caractérisé par le fait

- qu'on forme la différence entre la moitié du premier diamètre D$_A$ et la moitié du second diamètre D$_B$ en tant que première grandeur de correction O$_S$,

- qu'on forme la différence entre le diamètre moyen D$_M$ et le troisième diamètre D$_C$ en tant que seconde grandeur de correction O$_W$, et

- qu'on forme les signaux de position à partir des signaux pour le diamètre moyen et les première et seconde grandeurs de correction et on les envoie à un autre dispositif de traitement (VE), les signaux de position déterminant, sur les axes optiques et sur un autre axe perpendiculaire à l'axe du troisième appareil d'enregistrement et passant par le point commun d'intersection des axes, des lieux (I-VIII), qui sont séparés du point d' intersection commun des axes par les distances DM/2 + 0$_S$/2 sur l'axe du premier appareil d'enregistrement DM/2 - O$_S$/2 sur l'axe du second appareil d'enregistrement, Dm/2 + O$_W$/2 sur l'axe du troisième appareil d'enregistrement et DM/2 - O$_W$/2 sur l'autre axe.

2. Procédé suivant la revendication 1, caractérisé par le fait qu'en prenant pour base les lieux des points d'intersection des bords des ombres, on forme les distances moyennes des côtés du quadrilatère qui est formé par les bords des ombres déterminés par les premier et second appareils d'enregistrement, et qu'on forme, en tant que premier et second signaux de diamètre, des signaux respectivement proportionnels aux distances moyennes.

3. Procédé suivant la revendication 1 ou 2, caractérisé par le fait qu'en prenant pour base un hexagone déterminant les bords des ombres et circonscrit à l'objet, on forme la distance moyenne des côtés de l'hexagone, qui sont formes par les bords de l'ombre détectés par le troisième appareil d'enregistrement, et qu'on forme, en tant que troisième signal de diamètre, un signal proportionnel à cette distance moyenne.

$L_B$

$L_A$

A2 B1

B1 C2

A2 C2

A2 B2

$D_C$

A1 B1

F

2

C

B2 C1

A1 B2

$L_C$

45°

2

1

A1 C1

1

1

90°

2

A

B

U1

U2

$f(F_{A2\,B2,\,B2\,C1,\,A1\,C1,\,A1\,B1,\,B1\,C2,\,A2\,C2})$

U3

U4

$f(F)$

$f(D_M)$

U5

$f(D_C)$

$f(D_W)$

U6 $f(D_B)$

U10

VE

U7

$f(D_A)$

U8

$f(D_S)$

U9

$f(I...III)$

FIG 1

FIG 2

FIG 3